# EUROPEAN PATENT APPLICATION

(11) **EP 4 477 997 A1**
(43) Date of publication of application: **18.12.2024**
(21) Application number: 23178780.5
(22) Date of filing: 12.06.2023
(51) Int. Cl.: G01C 19/5776

(54) **VIBRATING STRUCTURE GYROSCOPE**

(71) Applicant: Atlantic Inertial Systems Limited, Plymouth, Devon PL6 6DE (GB)
(72) Inventor: HENDERSON, Geoffrey Thomas, Yelverton (GB)
(74) Representative: Dehns

(57) **Abstract**

A vibrating structure gyroscope comprises: a structure configured to vibrate; one or more drive transducers configured to oscillate the structure at a resonant frequency or dampen oscillation of the structure; one or more drive circuits configured to activate the one or more drive transducers; one or more pick off transducers configured to detect oscillation of the structure; one or more pick off circuits configured to output a pick off circuit signal based on the detected oscillations; and one or more controllers configured to adjust a drive signal for the one or more drive transducers based on the one or more pick off circuit signals; wherein the one or more controllers are configured to phase modulate the adjusted drive signal.

## Description

This disclosure relates to a vibrating structure gyroscope.

### BACKGROUND

Vibrating structure gyroscopes (VSGs) measure angular rate. Rate output errors occur due to non-linearities in the device components. It is therefore desirable to improve vibrating structure gyroscopes, and in particular, reduce errors in the measured angular rate.

### SUMMARY

According to an aspect, there is provided a vibrating structure gyroscope comprising: a structure configured to vibrate; one or more drive transducers configured to oscillate the structure at a resonant frequency or dampen oscillation of the structure; one or more drive circuits configured to activate the one or more drive transducers; one or more pick off transducers configured to detect oscillation of the structure; one or more pick off circuits configured to output a pick off circuit signal based on the detected oscillation; and one or more controllers configured to adjust a drive signal for the one or more drive transducers based on the one or more pick off circuit signals; wherein the one or more controllers are configured to phase modulate the adjusted drive signal. By phase modulating the adjusted drive signal, errors in measurements caused by non-linearities in the one or more drive circuits can be reduced and/or removed, and the drive circuit can be optionally provided without a digital-to-analogue converter.

The one or more controllers may be configured to phase modulate the adjusted drive signal to encode a sine component and a cosine component at the resonant frequency in the adjusted drive signal.

The one or more controllers may be configured to phase modulate the adjusted drive signal by adjusting a timing of transitions between fixed levels of the adjusted drive signal.

The one or more controllers may be configured to adjust the drive signal by determining a magnitude and a phase of a detected oscillation of the structure based on the one or more pick off circuit signals. The one or more controllers may be configured to adjust the drive signal based on a difference between the detected oscillation and a desired oscillation.

The one or more controllers may be configured to predict one or more previous drive transducer output signals.

The one or more controllers may be configured to determine a difference between a previous drive signal and the one or more predicted drive transducer output signals by subtracting the one or more predicted drive transducer output signals from the previous drive signal.

The one or more controllers may be configured to adjust the drive signal by adding the difference between the previous drive signal and the one or more predicted drive transducer output signals to the drive signal. This allows errors in the amplitude of the previous drive signal, e.g. due to timing quantisation, to be corrected.

The one or more controllers are configured to predict one or more phase errors in the one or more pick off circuit signals.

The one or more controllers may be configured to apply a phase correction to the one or more pick off circuit signals based on the one or more predicted phase errors. This allows errors in the phase of the one or more pick off circuit signals, e.g. due to timing quantisation, to be corrected.

The one or more pick off circuit signals may include a sine component and a cosine component.

The adjusted drive signal may comprise a two-level digital drive signal. This allows the vibrating structure gyroscope to be provided without a means to create an amplitude modulated signal, simplifying the electronics.

The one or more drive transducers may be a primary drive transducer and/or a secondary drive transducer.

The one or more pick off transducers may be a primary pick off transducer and/or a secondary pick off transducer.

The one or more controllers may be a primary controller and/or a secondary controller.

According to an aspect, there is provided a method of operating a vibrating structure gyroscope comprising a structure configured to vibrate, one or more drive transducers configured to oscillate the structure at a resonant frequency or dampen oscillation of the structure, one or more drive circuits configured to activate the one or more drive transducers; and one or more pick off circuits configured to output a pick off circuit signal based on the detected oscillation, the method comprising: adjusting a drive signal for the one or more drive transducers based on the one or more pick off circuit signals; and phase modulating the adjusted drive signal. By phase modulating the adjusted drive signal, errors in measurements caused by non-linearities in the one or more drive circuits can be reduced and/or removed, and the drive circuit can be optionally provided without a digital-to-analogue converter.

The method may comprise phase modulating the adjusted drive signal to encode a sine component and a cosine component at the resonant frequency in the adjusted drive signal.

The method may comprise phase modulating the adjusted drive signal by adjusting a timing of transitions between fixed levels of the adjusted drive signal.

The method may comprise adjusting the drive signal by determining a magnitude and a phase of a detected oscillation of the structure based on the one or more pick off circuit signals. The method may comprise adjusting the drive signal based on a difference between the detected oscillation and a desired oscillation.

The method may comprise predicting one or more previous drive transducer output signals.

The method may comprise determining a difference between a previous drive signal and the one or more predicted drive transducer output signals by subtracting the one or more predicted drive transducer output signals from previous the drive signal.

The method may comprise adjusting the drive signal by adding the difference between the previous drive signal and the one or more predicted drive transducer output signals to the drive signal. This allows errors in the amplitude of the previous drive signal, e.g. due to timing quantisation, to be corrected.

The method may comprise predicting one or more phase errors in the one or more pick off circuit signals.

The method may comprise applying a phase correction to the one or more pick off circuit signals based on the one or more predicted phase errors. This allows errors in the phase of the one or more pick off circuit signals, e.g. due to timing quantisation, to be corrected.

The one or more pick off circuit signals may include a sine component and a cosine component

The adjusted drive signal may comprise a two-level digital drive signal. This allows the vibrating structure gyroscope to be provided without a means to create an amplitude modulated signal, simplifying the electronics.

The one or more drive transducers may be a primary drive transducer and/or a secondary drive transducer.

The one or more pick off transducers may be a primary pick off transducer and/or a secondary pick off transducer.

The one or more controllers may be a primary controller and/or a secondary controller.

Embodiments will be further described and explained by way of example with reference to the accompanying drawings in which
Figure 1 shows a schematic view of a vibrating structure gyroscope; and
Figure 2 shows a drive signal for a vibrating structure gyroscope.

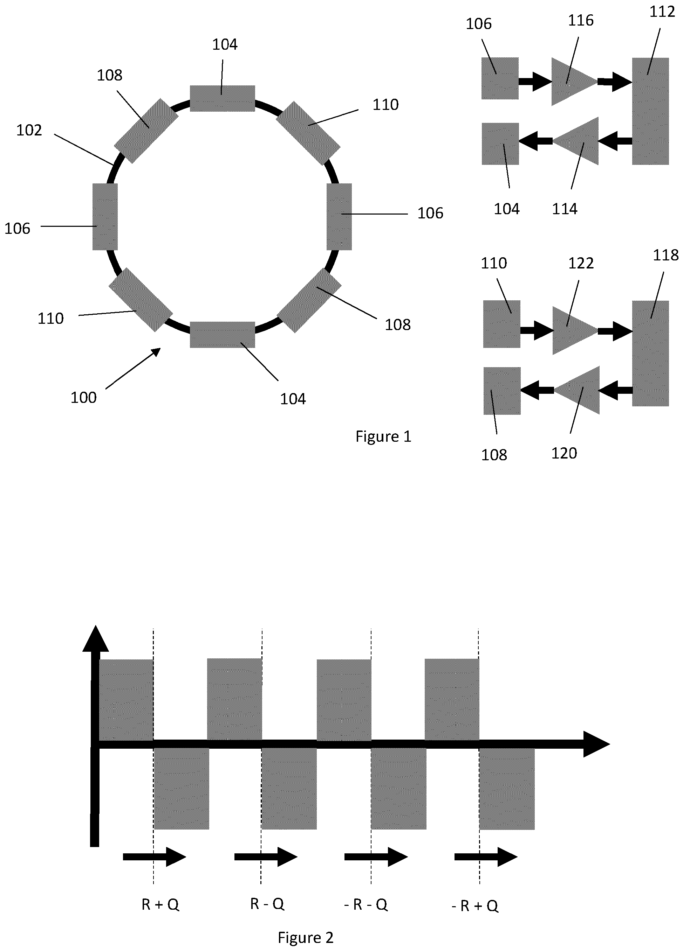

With reference to Figure 1, a vibrating structure gyroscope 100 comprises a structure 102, a primary drive transducer 104, and a primary pick off transducer 106. The structure 102 comprises a planar ring. However, in alternative embodiments, the structure 102 may comprise one or more of a ring, a beam, a tuning fork, a cylinder, a hemispherical shell, and a disk.

A primary controller 112 outputs a primary drive signal for the primary drive transducer 104 to oscillate the structure 102 at its resonant frequency. The primary drive signal is received by a primary drive circuit 114 which activates the primary drive transducer 104. This causes the primary drive transducer 104 to drive the structure 102 to oscillate, forming an antinode (i.e. where the oscillation of the structure is at a maximum) at the location of the primary drive transducer 104. The primary pick off transducer 106 detects oscillations of the structure 102 at a location 90° from the primary drive transducer 104 where a second antinode is formed, and outputs a primary pick off transducer signal. This signal is received by a primary pick off circuit 116 that processes the signal and transmits a primary pick off circuit signal to the primary controller 112.

Due to imperfections in the components of the primary pick off circuit 116, the output signal from the primary pick off circuit 116 is not identical to the output signal from the primary pick off transducer 106. In order to maintain resonant motion of the structure 102, the primary controller 112 predicts one or more phase errors in the primary pick off circuit output signal and applies a phase correction to the primary pick off circuit output signal based on the one or more predicted phase errors. The primary controller then determines a magnitude and phase of the detected oscillation based on the corrected primary pick off circuit output signal, and adjusts the primary drive signal from the previous resonant cycle based on a difference between the detected oscillation and a desired oscillation (i.e. a resonant oscillation).

Furthermore, due to imperfections in the components in the primary drive circuit 114, the output signal from the primary drive transducer 104 is not identical to the primary drive signal output from the primary controller 112. Taking this into account, the primary controller 112 predicts one or more errors caused by the primary drive circuit 114 in the previous resonant cycle and adjusts the primary drive signal based on the one or more errors.

For example, the primary controller 112 predicts a primary drive transducer output signal from the previous resonant cycle and subtracts this from the previous primary drive signal. The remainder (i.e. the difference between the predicted primary drive transducer signal and the previous primary drive signal) is added to the primary drive signal. This primary drive signal is then output the primary drive circuit 114.

As illustrated in Figure 1, the vibrating structure gyroscope 100 further comprises a secondary drive transducer 108, and a secondary pick off transducer 110. The secondary drive and pick off transducers 108, 110 are located at nodes on the structure 102 (i.e. at points that are expected not to oscillate when structure is stationary and the primary drive transducer 104 oscillates the structure 102 at its resonant frequency).

When the vibrating structure gyroscope 100 is rotated about an axis, Coriolis forces cause the antinodes and nodes to move position on the structure 102. The secondary pick off transducer 110 detects oscillations at the node (where there were none previously) and outputs a secondary pick off transducer signal. This signal is received by a secondary pick off circuit 122 which processes the signal and transmits a secondary pick off circuit signal to a secondary controller 118. The secondary controller 118 outputs a secondary drive signal for the secondary drive transducer 108 to null the oscillations. The secondary drive signal is received by a secondary drive circuit 120 which activates the secondary drive transducer 108. This causes the secondary drive transducer 108 to dampen the oscillations at the node.

The amplitude of the secondary drive signal is proportional to the angular rate of rotation of the vibrating structure gyroscope 100 about the axis. However, non-linearity errors in the secondary drive circuit 120 means that, while the oscillations are dampened by the secondary drive transducer 108, there are errors in the angular rate calculated by the controller 118. Phase modulating the secondary drive signal reduces these errors (as described below).

In a similar manner to the primary controller 112, due to imperfections in the components of the secondary pick off circuit 122, the output signal from the secondary pick off circuit 122 is not identical to the output signal from the secondary pick off transducer 110. In order to null oscillations at the node, the secondary controller 118 predicts one or more phase errors in the secondary pick off circuit output signal and applies a phase correction to the secondary pick off circuit output signal based on the one or more predicted phase errors. The secondary controller 118 then determines a magnitude and phase of the detected oscillation based on the corrected secondary pick off circuit output signal, and adjusts the secondary drive signal from a previous resonant cycle based on a difference between the detected oscillation and a desired oscillation (i.e. no oscillation).

Furthermore, due to imperfections in the components in the secondary drive circuit 120, the output signal from the secondary drive transducer 108 is not identical to the secondary drive signal output from the secondary controller 118. Taking this into account, the secondary controller 118 predicts one or more errors caused by the secondary drive circuit 120 in the previous resonant cycle and adjusts the primary drive signal based on the one or more errors.

For example, the secondary controller 118 predicts a secondary drive transducer output signal from the previous resonant cycle and subtracts this from the previous secondary drive signal. The remainder (i.e. the difference between the predicted secondary drive transducer signal and the previous secondary drive signal) is added to the secondary drive signal. This secondary drive signal is then output the drive circuit 114.

In some embodiments, the primary drive circuit 114 and the secondary drive circuit 120 may be the same circuit, i.e. there may only be one drive circuit. Similarly, the primary pick off circuit 116 and the secondary pick off circuit 122 may be the same circuit, i.e. there may only be one pick off circuit.

The secondary pick off circuit output signal includes a `Real' (R) component, i.e. a sine component, and a 'Quadrature' (Q) component, i.e. a cosine component. The `Real' (R) component provides the angular rate of rotation, while the `Quad' (Q) component is an error generated through imperfections in the components. As the `Quad' (Q) component is orthogonal in phase to the `Real' (R) component, it does not contribute to the angular rate of rotation. In order to dampen the oscillation of the structure 102, the secondary drive signal is generated with reciprocal `Real' (R) and `Quad' (Q) components, i.e. sine and cosine components.

Figure 2 shows a secondary drive signal for the secondary drive transducer 108. As illustrated, the secondary drive signal is a two-level (rectangular) digital drive signal comprising eight transitions in a single 14 kHz cycle. However, in other embodiments, the drive signal may have a different number of transitions, transition at different positions, and/or have a different shape.

The drive signal in Figure 2 is one that has not been phase modulated. The arrows indicate how the secondary drive signal changes after phase modulation.

The secondary controller 118 phase modulates the secondary drive signal by adjusting a timing of transitions between the fixed levels of the secondary drive signal in order to encode a sine component and a cosine component at the resonant frequency in the secondary drive signal. The use of a two-level phase modulated drive signal reduces the non-linearity errors since the point at which the secondary drive signal transitions between the two levels can be set precisely in time. This also allows for the drive circuit 114 to be provided without a digital-to-analogue converter.

Alternatively, the secondary drive signal may be subject to both amplitude modulation and phase modulation. For example, the secondary drive signal may comprise a four-level digital drive signal having amplitudes (R + Q), (R - Q), (- R - Q), and (- R + Q), corresponding to an amplitude modulated drive signal. In these embodiments, the secondary controller 118 applies phase modulation to the amplitude modulated drive signal as described above. Specifically, the secondary controller 118 phase modulates the amplitude modulated drive signal by adjusting a timing of transitions between the levels of the secondary drive signal in order to encode a sine component and a cosine component at the resonant frequency in the secondary drive signal.

The primary pick off circuit output signal is similar to the secondary pick off circuit signal except that the `Real' component provides resonant motion of the structure 102. This means that the secondary drive signal can also be amplitude and/or phase modulated in a similar manner to the primary drive signal.

Thus, in some embodiments one or both of the primary drive signal and the secondary drive signal are phase modulated. Additionally, one or both of the primary drive signal and the secondary drive signal may be amplitude modulated.

As illustrated in Figure 1, in some embodiments, the vibrating structure gyroscope 100 may comprise a pair of primary drive transducers 104, a pair of primary pick off transducers 106, a pair of secondary drive transducers 108, and a pair of secondary pick of transducers 110. Each pair may be arranged opposite each other around the vibrating structure gyroscope 100. However, this is not necessary, i.e. each pair may be arranged in other positions relative to each other, provided the primary drive transducers and/or primary pick off transducers are not aligned with the secondary drive transducers and/or secondary pick off transducers.

Various aspects of the vibrating structure gyroscope disclosed in the various embodiments may be used alone, in combination, or in a variety of arrangements not specifically discussed in the embodiments described in the foregoing and this disclosure is therefore not limited in its application to the details and arrangement of components set forth in the foregoing description or illustrated in the drawings. For example, aspects described in one embodiment may be combined in any manner with aspects described in other embodiments. Although particular embodiments have been shown and described, it will be obvious to those skilled in the art that changes and modifications may be made without departing from the invention in its broader aspects. The scope of the following claims should not be limited by the embodiments set forth in the examples, but should be given the broadest reasonable interpretation consistent with the description as a whole.

## Claims

1. A vibrating structure gyroscope comprising:
a structure configured to vibrate;
one or more drive transducers configured to oscillate the structure at a resonant frequency or dampen oscillation of the structure;
one or more drive circuits configured to activate the one or more drive transducers;
one or more pick off transducers configured to detect oscillation of the structure;
one or more pick off circuits configured to output a pick off circuit signal based on the detected oscillation; and
one or more controllers configured to adjust a drive signal for the one or more drive transducers based on the one or more pick off circuit signals;
wherein the one or more controllers are configured to phase modulate the adjusted drive signal.

2. The vibrating structure gyroscope of claim 1, wherein the one or more controllers are configured to phase modulate the adjusted drive signal to encode a sine component and a cosine component at the resonant frequency in the adjusted drive signal.

3. The vibrating structure gyroscope of claim 1 or 2, wherein the one or more controllers are configured to phase modulate the adjusted drive signal by adjusting a timing of transitions between fixed levels of the adjusted drive signal.

4. The vibrating structure gyroscope of any preceding claim, wherein the one or more controllers are configured to adjust the drive signal by determining a magnitude and a phase of a detected oscillation of the structure based on the one or more pick off circuit signals, wherein the one or more controllers are configured to adjust the drive signal based on a difference between the detected oscillation and a desired oscillation.

5. The vibrating structure gyroscope of claim 4, wherein the one or more controllers are configured to predict one or more previous drive transducer output signals.

6. The vibrating structure gyroscope of claim 5, wherein the one or more controllers are configured to determine a difference between a previous drive signal and the one or more predicted drive transducer output signals by subtracting the one or more predicted drive transducer output signals from the previous drive signal.

7. The vibrating structure gyroscope of claim 6, wherein the one or more controllers are configured to adjust the drive signal by adding the difference between the previous drive signal and the one or more predicted drive transducer output signals to the drive signal.

8. The vibrating structure gyroscope of any of claims 4-7, wherein the one or more controllers are configured to predict one or more phase errors in the one or more pick off circuit signals.

9. The vibrating structure gyroscope of claim 7, wherein the one or more controllers are configured to apply a phase correction to the one or more pick off circuit signals based on the one or more predicted phase errors.

10. The vibrating structure gyroscope of any preceding claim, wherein the one or more pick off circuit signals include a sine component and a cosine component.

11. The vibrating structure gyroscope of any preceding claim, wherein the adjusted drive signal comprises a two-level digital drive signal.

12. The vibrating structure gyroscope of any preceding claim, wherein the one or more drive transducers is a primary drive transducer and/or a secondary drive transducer.

13. The vibrating structure gyroscope of any preceding claim, wherein the one or more pick off transducers is a primary pick off transducer and/or a secondary pick off transducer.

14. The vibrating structure gyroscope of any preceding claim, wherein the one or more controllers is a primary controller and/or a secondary controller.

15. A method of operating a vibrating structure gyroscope comprising a structure configured to vibrate, one or more drive transducers configured to oscillate the structure at a resonant frequency or dampen oscillation of the structure, one or more drive circuits configured to activate the one or more drive transducers; one or more pick off transducers configured to detect oscillation of the structure; and one or more pick off circuits configured to output a pick off circuit signal based on the detected oscillation, the method comprising:
adjusting a drive signal for the one or more drive transducers based on the one or more pick off circuit signals; and
phase modulating the adjusted drive signal.
